# FASCICULE DE BREVET EUROPEEN

(11) **EP 2 034 409 B1**
(45) Date de publication et mention de la délivrance du brevet: **01.11.2017**
(21) Numéro de dépôt: 08163564.1
(22) Date de dépôt: 03.09.2008
(51) Int. Cl.: G06F 11/07, G05B 23/02, G07C 5/08

(54) **Procédé de gestion de défaillances avec mémorisation de ces défaillances pour un véhicule automobile**
Verfahren zur Verwaltung von Störungen mit Speicherung dieser Störungen für ein Kraftfahrzeug
Method of managing failures with memorization of these failures for an automobile

(30) Priorité: 06.09.2007 FR 0757370
(43) Date de publication de la demande: 11.03.2009
(73) Titulaire: PSA Automobiles SA, 78300 Poissy (FR)
(72) Inventeur: Croc, François, M., 92600 ASNIERES SUR SEINE (FR)
(74) Mandataire: Vigand, Régis Louis Michel

(56) Documents cités:
- EP-A- 0 585 479
- EP-A2- 2 000 874
- WO-A-2006/077900
- GB-A- 2 339 119
- US-A- 5 594 646
- US-A1- 2005 060 619

## Description

La présente invention concerne un procédé de gestion de défaillances avec mémorisation de ces défaillances pour un véhicule automobile.

Il est usuel d'équiper un véhicule automobile de calculateurs permettant de détecter une défaillance d'un élément embarqué dans ce véhicule.

Une telle défaillance peut être permanente lorsque, par exemple, se produit la rupture d'un fil d'alimentation d'un élément. Dans ce cas, cette défaillance peut être détectée à tout instant, notamment lors d'une révision du véhicule visant à établir un diagnostic du fonctionnement de ses différents éléments.

Mais une défaillance peut également être temporaire ou fugitive lorsque, par exemple, un mauvais contact perturbe de façon discontinue l'alimentation d'un élément. Dans ce cas, cette défaillance fugitive peut être inexistante lors de la révision du véhicule.

Afin de pouvoir traiter l'ensemble des défaillances détectées dans un véhicule, il est connu que ce véhicule comprenne un calculateur central pouvant mémoriser des informations relatives aux défaillances détectées par d'autres calculateurs.

Ainsi, l'accès à la mémoire de ce calculateur central lors d'une révision du véhicule permet de connaître l'existence d'une défaillance fugitive sans que cette défaillance soit effectivement présente lors de la révision.

En outre, les informations fournies par la mémoire centrale visent à faciliter le traitement des défaillances en permettant, notamment, de distinguer une première défaillance inductrice de secondes défaillances induites.

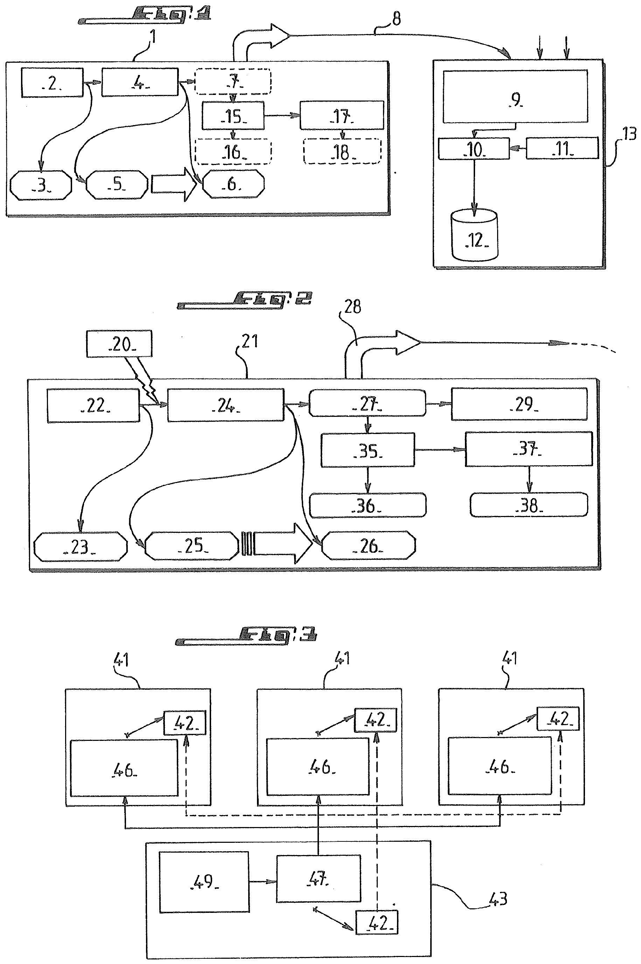

En référence à la figure 1, est décrit ci-dessous le fonctionnement selon l'art antérieur d'un calculateur 1 effectuant la détection 2 d'une défaillance.

Suite à cette détection 2, le calculateur 1 commande le fonctionnement de l'élément défaillant sous un régime 3 dégradé simultanément à un filtrage 4 pour apparition du défaut.

A la suite du filtrage 4, un second mode dégradé 5 peut être mis en oeuvre. Ce second mode dégradé 5 peut évoluer vers un troisième mode dégradé 6.

Parallèlement à la mise en oeuvre du second ou du troisième mode dégradé, cette mise en oeuvre pouvant induire la détection d'autres défaillances, une confirmation 7 relative à la présence de la défaillance détectée est requise :
- Si cette requête ne peut être satisfaite suite à l'absence 15 de la défaillance, cette dernière est soit considérée comme une défaillance furtive 16, soit traitée par un filtrage 17 pour permettre la disparition de signalisation de cette défaillance. Dans ce dernier cas, un effacement 18 des informations relatives à cette défaillance est effectué,
- Si cette requête est satisfaite, suite à une nouvelle détection de la défaillance, une transmission 8 d'informations relatives à cette défaillance est effectuée vers un calculateur central 13.

Ce calculateur central habitacle 13, autrement appelé BSI, comprend un contrôleur 9 gérant les différentes transmissions 8 d'informations relatives à des défaillances. Notamment, ce contrôleur permet une datation 11 de la défaillance, notamment par indexation d'un kilométrage 11 associée aux informations relatives à une défaillance dans une écriture avant leur stockage dans une mémoire 12, par exemple dans le journal des défauts du véhicule, autrement appelé JDD.

Le stockage des défaillances permanentes ou furtives dans un véhicule à l'aide de calculateurs tels que décrits ci-dessus présente de nombreux inconvénients. Ainsi, l'indexation 10 des informations relatives à une défaillance est effectuée lors du stockage de ces informations et non lors de leur détection au moment le plus proche de leur apparition.

De ce fait, cette indexation s'effectue après la détection d'une défaillance, ce qui génère un décalage entre l'instant auquel est détecté une défaillance par un calculateur 1 et l'instant auquel est indexé ce défaut dans le calculateur central 13 ou BSI.

Or un tel décalage dans les indexations peut être problématique pour analyser les informations stockées dans la mémoire 12, notamment en vue de déterminer une première défaillance inductrice de secondes défaillances.

En outre, l'indexation des informations relatives à une défaillance s'effectue en associant à ces dernières un kilométrage auquel cette défaillance est mémorisée.

Or une telle indexation kilométrique ne permet pas de déterminer avec suffisamment de précision la chronologie des défaillances détectées de façon rapprochées. Notamment, une première défaillance se révèle difficile à distinguer des secondes défaillances qu'elle peut induire.

Par ailleurs, les informations relatives à une défaillance sont stockées dans le JDD sans indication propre au contexte de la défaillance. En d'autres termes, seules les informations anormales, propres à la défaillance, sont stockées.

Or ces indications, telles qu'un régime moteur ou une température extérieure, sont très utiles afin de comprendre l'origine et/ou les raisons d'une défaillance.

En outre, un premier calculateur 1 détectant une défaillance doit transmettre des informations relatives à cette défaillance à un second calculateur central 13. Dans ce cas, le remplacement d'un seul de ces premier ou second calculateurs peut générer d'éventuelles incohérences entre ceux-ci.

Finalement, un calculateur 1 peut effectuer de nombreuses transmissions 8 successives pour chaque détection d'une même défaillance temporaire. Or, ces transmissions successives peuvent saturer la mémoire 12, par exemple le journal des défauts alors même qu'elles ne concernent qu'une seule et même défaillance.

Il est connu notamment du document WO2006/077900A, un procédé de gestion de défaillance pour véhicule automobile conforme au préambule de la revendication 1.

Le problème à la base de la présente invention est donc de permettre une datation de la défaillance le plus vite possible dès son apparition tout en l'associant avec une mémorisation de données pouvant être nécessaires pour la compréhension de cette défaillance (les contextes) et enfin une mémorisation des défaillances qui soit décentralisée et réalisée par chaque calculateur de détection ou par un calculateur central présentant des mémoires spécifiques à chaque calculateur de détection.

Ce problème est résolu par un procédé de gestion de défaillance pour véhicule automobile, conforme à la partie caractérisante de la revendication 1.

Selon d'autres caractéristiques additionnelles de la présente invention :
- le procédé comprend une détermination des indications propres à un contexte de la défaillance détectée, un figeage des contextes lors de la datation, et un stockage de ces indications avec la défaillance dans la mémoire de stockage,
- le procédé est effectué par un calculateur incluant la mémoire de stockage,
- la datation est réalisée à l'aide d'une horloge interne pouvant déterminer une date de détection de la défaillance avec une précision de l'ordre de la seconde,
- l'horloge interne est synchronisée avec une horloge externe.

L'invention concerne aussi un véhicule automobile muni d'un calculateur incluant une mémoire de stockage, caractérisé en ce que le calculateur comprend des moyens pour mettre en oeuvre un procédé comme précédemment décrit.

Grâce à l'invention, les informations relatives à une défaillance détectée sont mémorisées avec une date de détection.

Ainsi, l'indexation de ces défaillances s'effectue au plus proche de leur apparition, ce qui facilite leur traitement ultérieur.

En outre, ce traitement est également facilité grâce à l'indexation par date de ces informations. De fait, une telle datation permet de déterminer la chronologie des défaillances pouvant notamment distinguer une première défaillance inductrice de secondes défaillances induites.

L'invention sera mieux comprise et d'autres buts, avantages et caractéristiques apparaîtront plus clairement à la lecture de la description qui suit et qui est faite au regard des dessins annexés et sur lesquels :
- la figure 1 représente le fonctionnement d'un calculateur selon l'art antérieur,
- la figure 2 représente un schéma illustrant les diverses étapes du procédé de gestion de défaillances selon l'invention et,
- la figure 3 représente un schéma d'un réseau de calculateurs pour la mise en oeuvre d'un procédé de gestion de défaillances selon l'invention, ce réseau présentant un moyen de synchronisation de l'horloge interne de chaque calculateur.

La figure 1 a déjà été décrite dans la partie introductive de la présente invention.

En référence à la figure 2, le procédé de gestion de défaillances conformément à la présente invention utilise un calculateur 21 comprenant un détecteur pour effectuer la détection 22 d'une défaillance d'un élément du véhicule, ce qui représente la première étape du procédé selon l'invention.

Une telle détection entraîne un filtrage 24, analogue au filtrage 4 précédemment décrit à la figure 1, tandis qu'est mis en oeuvre un mode dégradé 23 et un mode dégradé 25 après filtrage 24.

Ce filtrage peut consister en un certain seuil de valeur de fonctionnement spécifique à un élément du véhicule à ne pas franchir, à la hausse comme à la baisse, pour un fonctionnement normal de cet élément et cela pendant un certain temps, pendant une certaine durée ou même pendant un certain nombre de roulage du véhicule, afin de ne pas prendre en compte des mesures instantanées aberrantes. Cette filtration permet d'éliminer les défaillances furtives ou anecdotiques ainsi que les valeurs relevées dues à une erreur de détection afin de ne pas mémoriser postérieurement trop de données. Par exemple, si la défaillance n'est pas confirmée pendant un certain nombre de cycle réglable, préalablement défini et adapté à la détection de celle-ci, la défaillance n'est pas prise en compte.

Préalablement, un traitement 20 associe aux informations relatives à la défaillance une date et des indications propres au contexte de cette défaillance. Cette datation est une mesure essentielle du procédé selon la présente invention et est effectuée après l'étape de détection et avant l'étape de confirmation qui va suivre. On obtient ainsi une datation qui est réalisée le plus tôt possible après la détection de la défaillance, ce qui permet la connaissance des indications propres au contexte de cette défaillance au moment de son apparition et sera très utile pour l'étude ultérieure des causes et des conséquences de cette défaillance.

Par la suite, selon la seconde étape du procédé selon l'invention, une confirmation 27 de la défaillance est requise de telle sorte que :
- soit cette défaillance est confirmée, auquel cas est effectuée une transmission 28 des informations relatives à l'élément défaillant vers une mémoire extérieure ou intérieure 29 au calculateur 21, selon la troisième étape du procédé selon l'invention, la mémoire extérieure étant non représentée à cette figure,
- soit cette défaillance n'est plus détectée suite à l'absence 35 de la défaillance. Dans ce cas, la défaillance peut être considérée comme une défaillance furtive 36 ou être traitée par un filtrage 37, un effacement 38 des informations relatives à cette défaillance étant alors effectué.

Les informations relatives à la défaillance d'un élément du véhicule, essentiellement la date de détection et des indications propres au contexte de la défaillance lors de son apparition, peuvent être stockées dans une mémoire 29 d'un calculateur dédié à l'élément contrôlé. Ainsi on obtient une mémorisation décentralisée pour chaque calculateur 21 des défaillances et des informations relatives au contexte de cette défaillance de l'élément ou des éléments spécifiques du véhicule dédiés à ce calculateur.

En alternative ou en parallèle, ces informations relatives à une défaillance, ainsi que la date de détection et des indications propres au contexte de la défaillance, peuvent être stockées sur la mémoire d'un calculateur central, cette mémoire de stockage étant avantageusement compartimentée de façon à allouer une quantité de mémoire limitée à chaque calculateur transmettant ces données.

Ainsi, la détection récurrente par un calculateur d'une même défaillance, par exemple une défaillance qui alterne sur chaque cycle de détection les états présent et absent, ne peut saturer l'ensemble de la mémoire du calculateur central. De ce fait, les transmissions récurrentes de données associées à ces détections sont stockées dans la mémoire allouée à ce calculateur, ce qui assure la disponibilité de la mémoire pour des informations en provenance d'autres calculateurs.

Dans le cas d'une mémorisation des défaillances pour chaque calculateur 21, celui-ci comprend des moyens pour déterminer des indications propres à un contexte de la défaillance et une horloge interne déterminant la date à laquelle est effectuée la détection avec une précision de l'ordre de la seconde, voire de la milliseconde.

Selon d'autres variantes, le calculateur 21 détermine cette date à partir d'une horloge externe transmettant la date.

En référence à la figure 3, des calculateurs 41 conformes à l'invention sont reliés à un calculateur central 43 ou calculateur maître fournissant un signal d'horloge synchronisant les horloges 42 présentes dans les calculateurs.

A cet effet, les différents calculateurs 41 sont reliés au calculateur central 43 ou calculateur maître de telle sorte qu'ils partagent une même source de temps par l'intermédiaire du dispositif de synchronisation 47.

Par exemple, chaque calculateur 41 peut comprendre un oscillateur 46 relié à un dispositif de synchronisation 47 commandé par l'oscillateur 49 du calculateur central 43.

Le procédé selon la présente invention permet donc une datation effectuée entre l'étape de détection et l'étape de confirmation, donc pratiquement dès l'apparition de la défaillance. Cette datation est plus précise qu'une indication kilométrique jointe à la détection de la défaillance. De plus et surtout, les défaillances ne sont plus mémorisées dans un désordre temporel relatif, du fait du temps s'écoulant entre la détection d'une défaillance et sa mémorisation, et plus précisément, entre sa détection et sa confirmation.

Ainsi avec le procédé selon la présente invention, ce désordre est pratiquement annulé et les défaillances peuvent être mémorisées dans l'ordre chronologique de leur apparition ce qui peut permettre de déterminer, le cas échéant, la défaillance initiale et les défaillances induites.

## Revendications

1. Procédé de gestion de défaillance pour véhicule automobile, comprenant successivement une première étape de détection (22) d'une défaillance, une seconde étape de confirmation (27) de cette défaillance et une troisième étape de stockage (29) de cette défaillance dans une mémoire, l'étape de confirmation impliquant la confirmation ou la non confirmation de la défaillance détectée selon le type de défaillance, une défaillance confirmée étant ensuite nécessairement stockée pour permettre un éventuel traitement ultérieur, une défaillance non confirmée n'étant pas stockée de sorte qu'un éventuel traitement ultérieur de cette défaillance ne sera plus possible, une datation de cette défaillance étant effectuée préalablement à l'étape de stockage, la datation est effectuée entre l'étape de détection et l'étape de confirmation, **caractérisé en ce que** l'étape de confirmation consiste à confirmer la présence de la défaillance pendant un certain nombre de cycle réglable, préalablement défini et adapté à la détection de ladite défaillance.

2. Procédé selon la revendication 1 **caractérisé en ce qu'**il comprend une détermination (20) des indications propres à un contexte de la défaillance détectée et un stockage de ces indications avec la défaillance dans la mémoire de stockage (29).

3. Procédé selon la revendication 1 ou 2 **caractérisé en ce qu'**il est effectué par un calculateur incluant la mémoire de stockage (29).

4. Procédé selon l'une des revendications précédentes **caractérisé en ce que** la datation est réalisée à l'aide d'une horloge interne (42) pouvant déterminer une date de détection de la défaillance avec une précision de l'ordre de la seconde.

5. Procédé selon la revendication 4 **caractérisé en ce que** l'horloge interne (46) est synchronisée avec une horloge externe (49).

6. Véhicule automobile muni d'un calculateur (21, 41) incluant une mémoire de stockage (29), **caractérisé en ce que** le calculateur comprend des moyens pour mettre en oeuvre un procédé conforme à l'une des revendications précédentes.

## Patentansprüche

1. Verfahren zur Verwaltung von Störungen für ein Kraftfahrzeug, das nacheinander einen ersten Schritt des Erfassens (22) einer Störung, einen zweiten Schritt des Bestätigens (27) dieser Störung und einen dritten Schritt des Speicherns (29) dieser Störung in einem Speicher umfasst, wobei der Schritt des Bestätigens das Bestätigen oder das Nichtbestätigen des erfassten Versagens gemäß dem Versagenstyp impliziert, wobei ein bestätigtes Versagen anschließend notwendigerweise gespeichert wird, um eine eventuelle spätere Verarbeitung zu erlauben, wobei ein nicht bestätigtes Versagen nicht gespeichert wird, so dass eine eventuelle spätere Verarbeitung dieser Störung nicht mehr möglich ist, wobei ein Datieren dieser Störung vor dem Speicherschritt ausgeführt wird, wobei das Datieren zwischen dem Erfassungsschritt und dem Bestätigungsschritt ausgeführt wird, **dadurch gekennzeichnet, dass** der Bestätigungsschritt darin besteht, die Gegenwart der Störung während einer einstellbaren bestimmten Anzahl von Zyklen, die vorab definiert und an das Erfassen der Störung angepasst wird, zu bestätigen.

2. Verfahren nach Anspruch 1, **dadurch gekennzeichnet, dass** es ein Bestimmen (20) der Angaben, die einem Kontext der erfassten Störung eigen sind, und ein Speichern dieser Angaben mit der Störung in dem Speicher (29) umfasst.

3. Verfahren nach Anspruch 1 oder 2, **dadurch gekennzeichnet, dass** es von einem Rechner, der den Speicher (29) enthält, ausgeführt wird.

4. Verfahren nach einem der vorhergehenden Ansprüche, **dadurch gekennzeichnet, dass** die Datierung mit Hilfe eines internen Taktgebers (42) ausgeführt wird, der ein Erfassungsdatum der Störung mit einer Präzision in der Größenordnung der Sekunde bestimmen kann.

5. Verfahren nach Anspruch 4, **dadurch gekennzeichnet, dass** der interne Taktgeber (46) mit einem externen Taktgeber (49) synchronisiert ist.

6. Kraftfahrzeug, das mit einem Rechner (21, 41) versehen ist, der einen Speicher (29) aufweist, **dadurch gekennzeichnet, dass** der Rechner Mittel umfasst, um ein Verfahren nach einem der vorhergehenden Ansprüche umzusetzen.

## Claims

1. A method of managing failure for an automobile, including successively a first step (22) for detection of a failure, a second step (27) for confirmation of this failure, and a third step (29) for storing this failure in a memory, the confirmation step involving the confirmation or the non-confirmation of the detected failure according to the type of failure, a confirmed failure between then necessarily stored so as to permit a possible subsequent processing, a non-confirmed failure not being stored, so that a possible subsequent processing of this failure will no longer be possible, a dating of this failure being carried out prior to the storage step, the dating is carried out between the detection step and the confirmation step, **characterized in that** the confirmation step consists of confirming the presence of the failure during an adjustable cycle number, previously defined and adapted to the detection of said failure.

2. The method according to Claim 1, **characterized in that** it includes a determination (20) of the indications suited to a context of the detected failure and a storage of these indications with the failure in the storage memory (29).

3. The method according to Claim 1 or 2, **characterized in that** it is carried out by a computer including the storage memory (29).

4. The method according to one of the preceding claims, **characterized in that** the dating is realized by means of an internal clock (42) able to determine a date of detection of the failure with a precision in the order of a second.

5. The method according to Claim 4, **characterized in that** the internal clock (46) is synchronized with an external clock (49).

6. An automobile provided with a computer (21, 41) including a storage memory (29), **characterized in that** the computer includes means for implementing a method according to one of the preceding claims.
